# EUROPEAN PATENT APPLICATION

(11) **EP 1 714 944 A1**
(43) Date of publication of application: **25.10.2006**
(21) Application number: 06112209.9
(22) Date of filing: 04.04.2006
(51) Int. Cl.: C02F 1/32

(54) **Fluid disinfection apparatus and system**

(30) Priority: 13.04.2005 GB 0507460
(71) Applicant: Snowball, Malcolm Robert, Epping, Essex CM16 6TW (GB)
(72) Inventor: Snowball, Malcolm Robert, Epping, Essex CM16 6TW (GB)
(74) Representative: Evans, Huw David Duncan

(57) **Abstract**

A fluid disinfection apparatus 10 comprises a disinfection chamber 12 through which fluid to be disinfected flows, and an ultra-violet (UV) lamp 14, operable to output UV light at a germicidal wavelength. First and second fluid inlets 18, 20 and first and second fluid outlets 22, 24 are selectively opened to define a fluid flow path through the disinfection chamber 12. Cleaning apparatus 16 is provided on the UV lamp 14 and comprises a cleaning head 42, a drive plate 46 and four vanes 48. To clean the UV lamp 14, a fluid flow path from the first fluid inlet 18, through the disinfection chamber 12 to the second fluid outlet 24 is defined. Fluid entering the disinfection chamber 12 engages the drive plate 16 and vanes 48, thereby driving the cleaning apparatus 16 along the UV lamp 14 and cleaning the UV lamp 14.

## Description

This invention relates to a fluid disinfection apparatus and a fluid disinfection system comprising a plurality of said fluid disinfection apparatus.

It is well known that high intensity ultra violet (UV) light has germicidal properties that can be used to disinfect water. The germicidal effect of UV light occurs when UV light is transmitted through a liquid, resulting in the disruption of the DNA of any micro-organisms within the liquid and thereby killing or inactivating the micro-organisms. EP0202891 discloses a fluid treatment device which utilizes these properties and comprises an elongate tubular duct having inlet and outlet ports at or adjacent its opposite ends, an elongate UV light source extending along the axis of the duct and a guide vane extending helically along the internal wall of the duct between the input and output ports.

During use of such a fluid treatment device for treating water, slime and other matter can accumulate on the submerged surface of a UV lamp; this causes attenuation of the UV light to such a level that micro-organisms that do not come into close proximity with the UV lamp do not receive a dose of UV radiation which is sufficient to kill them.

According to a first aspect of the present invention there is provided fluid disinfection apparatus comprising:
a disinfection chamber through which fluid to be disinfected flows;
an ultra violet light source extending through the chamber and operable to irradiate fluid therein with ultra violet light of a germicidal wavelength;
cleaning apparatus movably mounted on the ultra violet light source and comprising a cleaning head arranged to contact the external surface of the light source and drive means for engagement with a flow of fluid,
whereby a flow of fluid through the chamber drives the cleaning apparatus across the light source, thereby cleaning the external surface of the light source.

The disinfection chamber is preferably provided with a first fluid inlet towards one end and a first fluid outlet towards its other end, the first fluid inlet and the first fluid outlet defining a first fluid path through the chamber.

The disinfection chamber is preferably further provided with a second fluid inlet towards its other end and a second fluid outlet towards its one end, the second fluid inlet and the second fluid outlet defining a second fluid path through the chamber.

The fluid disinfection apparatus preferably further comprises first fluid routing means in fluid communication with the first and second fluid inlets, the first fluid routing means being operable to selectively route fluid to one of the first fluid inlet and the second fluid inlet.

The fluid disinfection apparatus preferably further comprises second fluid routing means and a fluid outlet conduit, the second fluid routing means being in fluid communication with the first and second fluid outlets and the fluid outlet conduit and being operable to selectively route fluid from one of the first fluid outlet and the second fluid outlet to the fluid outlet conduit.

The or each fluid routing means is preferably operable to control the rate of flow of fluid through it, and thus the rate of flow of fluid through the disinfection chamber.

The or each fluid routing means may comprise a three-port valve or may comprise two one-port valves.

The ultra-violet light source preferably comprises an ultra-violet lamp, and most preferably comprises a mercury arc discharge lamp. The ultra-violet light source may further comprise a protective sleeve of an ultra-violet transparent material, such as quartz, within which the ultra-violet lamp is provided. The ultra-violet light source is preferably operable to generate ultra-violet light including one or more wavelengths within the range 220 to 280 nanometers.

The drive means preferably comprises a drive plate coupled to the cleaning head, at least part of the drive plate extending normal to a flow path of fluid through the disinfection chamber, such that a flow of fluid engaging with the drive plate causes the cleaning apparatus to move across the ultra-violet light source under the fluid pressure.

The ultra-violet lamp is preferably elongate.

The ultra-violet light source is preferably substantially circular in cross-section.

The cleaning head is preferably provided around the ultra-violet light source.

The drive means may further comprise one or more vanes for engagement with the flow of fluid, engagement of the or each vane with a flow of fluid causing the cleaning apparatus to rotate about the ultra-violet light source.

The or each vane is preferably provided on the drive plate and extends generally outwardly from it. The or each vane may be hingedly mounted on the drive plate such that it may be orientated to extend generally outwardly from either face of the drive plate, and such that the angle of the or each vane relative to the drive plate may be varied.

The cleaning head may comprise a Diablo wound spring, the central waisted section of the spring being biased into contact with the external surface of the ultra-violet light source.

The spring is preferably provided with a coating of a photo catalytic oxidising material.

The or each vane is preferably orientated with respect to the direction of fluid flow to cause the cleaning head to rotate about the ultra-violet light source in a direction which causes the Diablo wound spring to open.

The cleaning head may alternatively comprise a section of cleaning material formed of entangled, knitted or woven fibres. The cleaning head may comprise a plurality of sections of said cleaning material.

The or each section may extend around part of the circumference or the full circumference of the ultra-violet light source. The cleaning material may be a fabric or metal.

Preferably the cleaning material is biased into contact with ultra-violet light source.

Preferably the cleaning material is a gauze, which is preferably cut on the bias, such that substantially the full area of the gauze is biased into contact with the external surface of the ultra-violet light source.

The cleaning material may be coated with a photo catalytic oxidising material.

The photo catalytic oxidising material is preferably titanium dioxide, most preferably in the anataise form.

According to a second aspect of the invention there is provided a fluid disinfection system comprising a plurality of fluid disinfection apparatus according to the first aspect of the invention provided in fluid communication with one another.

The plurality of fluid disinfection apparatus may be provided in fluid communication in series or in parallel.

Embodiments of the invention will now be described in detail, by way of example only, with reference to the accompanying drawings, in which:
Figure 1 is a diagrammatic representation of fluid disinfection apparatus according to a first embodiment of the invention, the cleaning apparatus having its vanes closed and being located at a first position along the ultra-violet lamp;
Figure 2 shows the apparatus of Figure 1 with the cleaning apparatus having its vanes open and being located at a second position along the ultra-violet lamp;
Figure 3 is a diagrammatic representation, with part cut out, of the cleaning apparatus of Figure 1;
Figure 4 is a diagrammatic representation of one half of a cleaning apparatus according to a second embodiment of the invention, for use with the apparatus of Figure 1; and
Figure 5 is a diagrammatic representation of a fluid disinfection system according to a third embodiment of the invention.

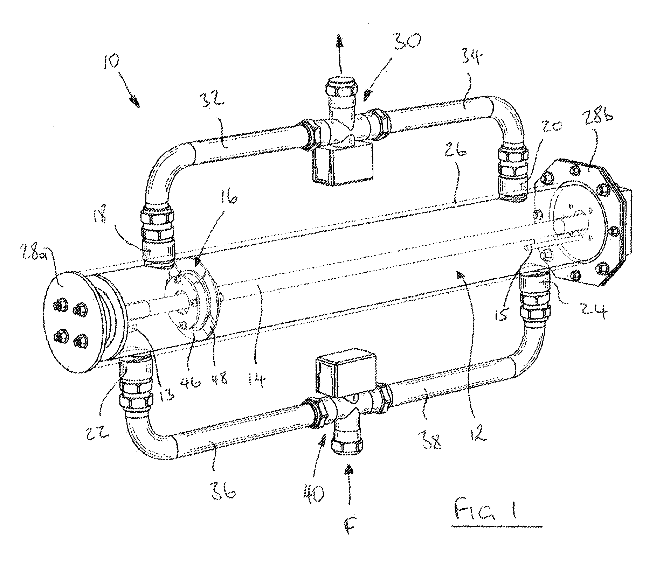

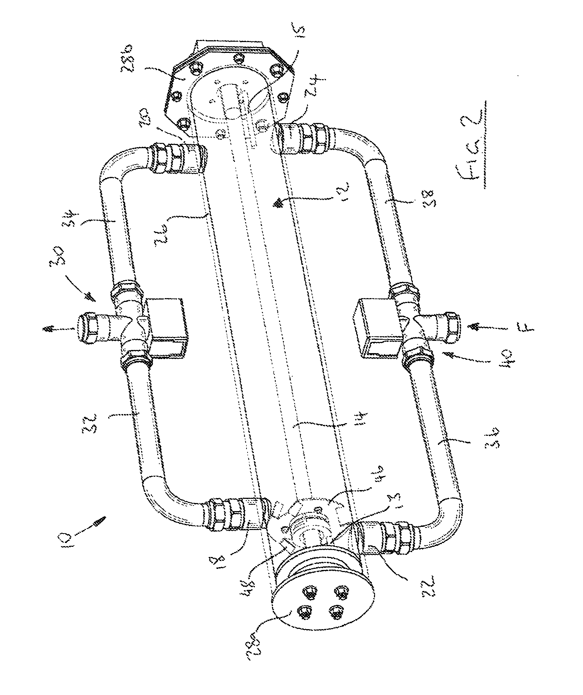

Referring to Figures 1 and 2, a first embodiment of the invention provides fluid disinfection apparatus 10 comprising a disinfection chamber 12 through which fluid to be disinfected flows, an ultra-violet (UV) lamp 14, cleaning apparatus 16, a first fluid inlet 22, a second fluid inlet 24, a first fluid outlet 18, and a second fluid outlet 20.

The disinfection chamber 12 is defined by an elongate tubular body 26 sealed at each end by end caps 28a, 28b. A first stop 13 is provided on the end cap 28a at one end of the disinfection chamber 12 and a second stop 15 is provided on the end cap 28b at the other end of the disinfection chamber 12. The stops 13, 15 define the parking position of the cleaning apparatus 16 at each end of the disinfection chamber 12, as will be described in more detail below.

The UV lamp 14 comprises a mercury arc discharge lamp, operable to output ultra violet light including one or more germicidal wavelengths (220nm to 280nm). The UV lamp 14 is tubular in shape and is provided within a protective quartz sleeve. The UV lamp 14 extends longitudinally, centrally through the disinfection chamber 12.

The first fluid inlet 22 is provided adjacent one end of the disinfection chamber 12 and the second fluid inlet 24 is provided adjacent the other end of the disinfection chamber 12. The stops 13, 15 extend past the respective fluid inlets 22, 24, so that the cleaning apparatus 16 is parked in front of the respective fluid inlet 22, 24 at each end of the disinfection chamber 12.

The first fluid outlet 18 is provided towards the one end of the disinfection chamber 12, opposite but longitudinally offset from the first fluid inlet 22. The second fluid outlet 20 is provided towards the other end of the disinfection chamber 12, opposite but longitudinally offset from the second fluid inlet 24.

Fluid (F) to be disinfected is pumped to the to first 3-way valve 40, where is it routed a selected one of the first and second fluid inlets 22, 24 via a first fluid inlet conduit 36 and a second fluid inlet conduit 38 respectively. Disinfected fluid is routed out of the apparatus 10 from a selected one of the first and second fluid outlets 18, 20, via a first fluid outlet conduit 32 and a second fluid outlet conduit 34 respectively, by a second 3-way valve 30. The 3-way valves 30, 40 are operable to control the rate of flow of fluid through them.

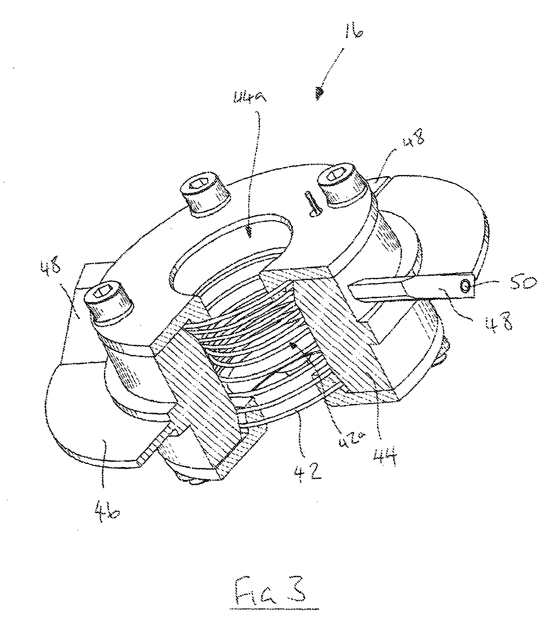

As shown in detail in Figure 3, the cleaning apparatus 16 comprises a cleaning head 42 provided within a housing 44, and drive means in the form of a drive plate 46 and vanes 48.

The cleaning head 42 comprises a Diablo wound spring coated with titanium dioxide in the anataise form; this form of titanium dioxide is a photo catalytic oxidizer which is activated on exposure to UV light of a germicidal wavelength. The provision of titanium dioxide on the cleaning head 42 thereby improves its cleaning function.

The spring 42 is waisted in the middle 42a, the diameter of the spring coil at the middle 42a being substantially the same as, or slightly less than, the external diameter of the UV lamp 14, such that when the spring 42 is located on the UV lamp 14 it is biased into contact with the external surface of the UV lamp 14. The spring 42 is mounted within a generally cylindrical housing 44, which defines a central aperture 44a through which the UV lamp 14 is received.

The drive plate 46 in this example comprises a generally annular shaped collar which extends generally outwardly from the housing 44, in a plane generally perpendicular to the central axis of the housing 44 and the spring 42, and thus the UV lamp 14.

Four vanes 48 are provided (only three are shown in the drawing) on the cleaning apparatus 16. In this example the vanes 48 are hingedly mounted on the drive plate 46 by pivot pins 50. The vanes 48 are movable between a closed position in which they are generally flat to the drive plate 46 and an open position in which they extend generally outwardly from the drive plate 46, in this example at an angle of approximately 45o to the drive plate 46.

In use, referring to Figure 1, the cleaning apparatus 16 is initially located at one end of the disinfection chamber 12, against the stop 13. A fluid flow path from the second fluid inlet 24, through the disinfection chamber 12 to the first fluid outlet 18 is defined by opening the first 3-way valve 40 to direct fluid to the second fluid inlet 24 and opening the second 3-way valve 30 to allow fluid to flow out of the first fluid outlet 18.

Fluid can thereby flow freely through the fluid disinfection apparatus 10 for treatment, without interacting with the cleaning apparatus 16.

To clean the UV lamp 14, the first 3-way valve 40 is opened to direct fluid to the first fluid inlet 22 and the second 3-way valve 30 is opened to allow fluid to flow out of the second fluid outlet 20. A fluid flow path from the first fluid inlet 22, through the disinfection chamber 12 to the second fluid outlet 20 is thereby defined.

Fluid entering the disinfection chamber 12 from the first fluid inlet 22 will impinge on the cleaning apparatus 16 and engage with the drive plate 16 and vanes 48, causing the cleaning apparatus 16 to be driven along the UV lamp 14 (as shown in Figure 1). In this example the vanes 48 are in the closed position, so the flow of fluid will cause the cleaning apparatus 16 to move along the UV lamp 14 with only minimal (if any) rotational movement of the cleaning apparatus.

As the cleaning apparatus 16 is driven along the UV lamp 14, the middle 42a of the spring 42, being the part of the spring 42 biased into contact with the external surface of the UV lamp 14, will scrape off any debris present on the UV lamp 14, thereby cleaning the UV lamp 14.

It will be understood that once the cleaning apparatus 16 has been driven to the other end of the disinfection chamber 12, and parked against the second stop 15, it can be driven back to the one end of the disinfection chamber 12 by opening the first 3-way valve 40 to again direct fluid to the second fluid inlet 24 and opening the second 3-way valve 30 to allow fluid to flow out of the first fluid outlet 18. Alternatively, the cleaning apparatus 16 can be left parked against the stop 15 at the other end of the disinfection chamber 12 and fluid can continue to flow through the disinfection apparatus 10 for treatment.

Referring to Figure 2, when the vanes 48 are in the open position, a flow of fluid impinging on the cleaning apparatus 16 will engage with the drive plate 46 and the vanes 48, causing the cleaning apparatus 16 to rotate whilst being driven along the UV lamp 14.

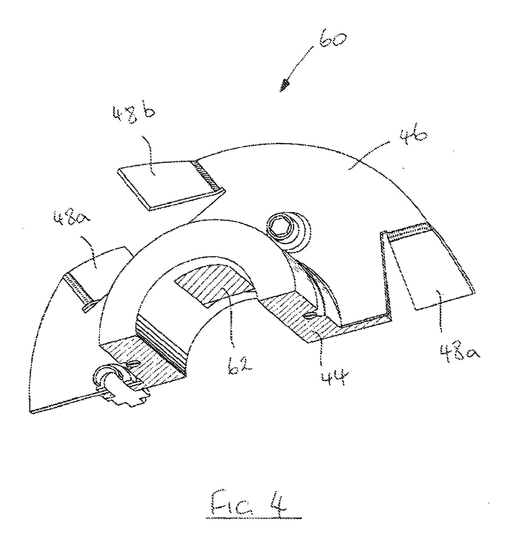

Figure 4 shows an alternative cleaning apparatus 60 which can be used with the fluid disinfection apparatus 10 of Figures 1 and 2. The cleaning apparatus 60 is substantially the same as the cleaning apparatus 16 of Figure 3, with the following modifications. The same reference numbers are retained for corresponding features. In this example, the cleaning head 62 comprises a section of metal gauze coated with titanium dioxide in the anataise form. The gauze 62 is mounted on the internal surface of the housing 44. The gauze 62 is cut on the bias, such that the full area of the gauze 62 is in contact with the surface of the UV lamp 14.

The vanes 48 are permanently fixed in an open position; a first opposing pair of vanes 48a extend generally outwardly from one face of the drive plate 46 and a second opposing pair of vanes 48b extend generally outwardly from the opposite face of the drive plate 46.

The vanes 48 are fixed open because the gauze 62 extends around only part of the external surface of the UV lamp 14; it is therefore necessary to for the cleaning apparatus 60 to undergo both rotational and linear movement along the UV lamp 14 in order to clean the full surface of the UV lamp 14.

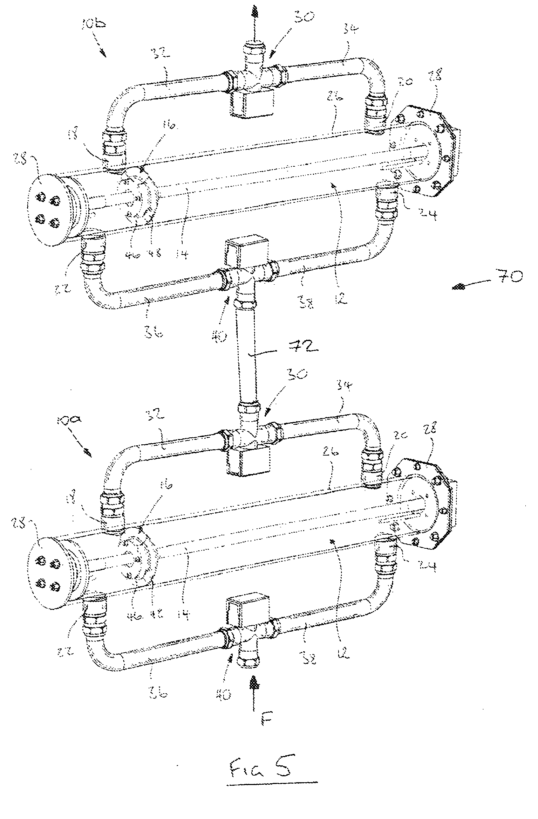

A fluid disinfection system 70 according to a third embodiment of the invention is shown in Figure 5. The fluid disinfection system 70 comprises two fluid disinfection apparatus 10 according to the first embodiment provided in fluid communication in series. The same reference numbers are retained for corresponding features.

The second 3-way valve 30 of the first fluid disinfection apparatus 10a is coupled to the first 3-way valve 40 of the second fluid disinfection apparatus 10b by a connecting conduit 72.

The fluid disinfection system 70 provides the advantage over the fluid disinfection apparatus 10 alone that disinfection of fluid can be maintained even while one of the UV lamps 14 is being cleaned.

Various modifications may be made to the described embodiments without departing from the scope of the invention. For example, the fluid inlets and outlets may be provided at different positions to those described. The fluid routing means may comprise a different type of valve to that shown, and in particular may comprise two pairs of one-way valves coupled respectively to the fluid inlets and the fluid outlets. The UV light source may comprise a different type of UV lamp to that described, and the UV lamp may extend through the disinfection chamber in a different arrangement to that shown. The UV lamp may be of a different shape and/or configuration to that described. In particular, the UV lamp may have a non-circular cross-section; the cleaning apparatus thus only being able to undergo linear movement along the UV lamp.

The cleaning apparatus may be of a different shape and/or configuration to those described. In particular, the drive plate may be of a different shape to that shown, there may be a different number of vanes provided on the drive plate and the vanes may be provided at a different angle to the drive plate. The vanes may alternatively be provided on the housing of the cleaning head, or may be removed entirely.

The described embodiments provide various advantages, as follows. Because the cleaning apparatus is driven along the UV lamp by the flow of fluid through the disinfection chamber, no mechanical drive apparatus or power source is required; the volume of the disinfection chamber available for disinfecting fluid is therefore maximised. In addition, the lack of a power supply for driving the cleaning apparatus makes the fluid disinfection apparatus safer for use with conductive fluids such as water. The fluid disinfection apparatus is thus both simpler in construction and lower in cost that known UV light based disinfection devices. Since the cleaning apparatus can be driven linearly or linearly and rotationally, the cleaning apparatus can be used on a UV light source of any cross-sectional shape.

## Claims

1. Fluid disinfection apparatus comprising:
a disinfection chamber through which fluid to be disinfected flows;
an ultra violet light source extending through the chamber and operable to irradiate fluid therein with ultra violet light of a germicidal wavelength;
cleaning apparatus movably mounted on the ultra violet light source and comprising a cleaning head arranged to contact the external surface of the light source and drive means for engagement with a flow of fluid,
whereby a flow of fluid through the chamber drives the cleaning apparatus across the light source, thereby cleaning the external surface of the light source.

2. Apparatus as claimed in claim 1, wherein the disinfection chamber is provided with a first fluid inlet towards one end and a first fluid outlet towards its other end, the first fluid inlet and the first fluid outlet defining a first fluid path through the chamber.

3. Apparatus as claimed in claim 2, wherein the disinfection chamber is further provided with a second fluid inlet towards its other end and a second fluid outlet towards its one end, the second fluid inlet and the second fluid outlet defining a second fluid path through the chamber.

4. Apparatus as claimed in claimed in claim 3, wherein the fluid disinfection apparatus further comprises first fluid routing means in fluid communication with the first and second fluid inlets, the first fluid routing means being operable to selectively route fluid to one of the first fluid inlet and the second fluid inlet.

5. Apparatus as claimed in claim 4, wherein the fluid disinfection apparatus further comprises second fluid routing means and a fluid outlet conduit, the second fluid routing means being in fluid communication with the first and second fluid outlets and the fluid outlet conduit and being operable to selectively route fluid from one of the first fluid outlet and the second fluid outlet to the fluid outlet conduit.

6. Apparatus as claimed in claims 4 or 5, wherein the or each fluid routing means is operable to control the rate of flow of fluid through it, and thus the rate of flow of fluid through the disinfection chamber.

7. Apparatus as claimed in any of claims 4 to 6, wherein the or each fluid routing means comprises a three-port valve or two one-port valves.

8. Apparatus as claimed in any preceding claim, wherein the drive means comprises a drive plate coupled to the cleaning head, at least part of the drive plate extending across a flow path of fluid through the disinfection chamber, such that a flow of fluid engaging with the drive plate causes the cleaning apparatus to move across the ultra-violet light source.

9. Apparatus as claimed in any preceding claim, wherein the ultra-violet lamp is elongate, the cleaning head being provided around the ultra-violet light source.

10. Apparatus as claimed in claim 9, wherein the drive means comprises one or more vanes for engagement with the flow of fluid, engagement of the or each vane with a flow of fluid causing the cleaning apparatus to rotate about the ultra-violet light source.

11. Apparatus as claimed in claim 10, wherein the angle of the or each vane is variable.

12. Apparatus as claimed in any preceding claim, wherein the cleaning head comprises a section of cleaning material formed of entangled, knitted or woven fibres biased against the ultra-violet light source.

13. Apparatus as claimed in claim 12, wherein the cleaning material is provided with a coating of a photo catalytic oxidising material.

14. A fluid disinfection system comprising a plurality of fluid disinfection apparatus as claimed in any preceding claim provided in fluid communication with one another.
